# EUROPEAN PATENT SPECIFICATION

(11) **EP 1 292 715 B1**
(45) Date of publication and mention of the grant of the patent: **24.05.2006**
(21) Application number: 01944478.5
(22) Date of filing: 12.06.2001
(51) Int. Cl.: C21D 10/00, B23K 26/18

(54) **ABLATION AND INSULATION LAYER FOR LASER PEENING**
ABLATIONS- UND ISOLATIONSSCHCHT ZUR VERWENDUNG BEI LASERSCHOCKBESTRAHLUNG
COUCHE D'ABLATION ET ISOLANTE POUR MARTELAGE AU LASER

(30) Priority: 12.06.2000 US 591829
(43) Date of publication of application: 19.03.2003
(73) Proprietor: The Regents of the University of California, Oakland, California 94607-5200 (US)
(72) Inventor: HACKEL, Lloyd, Livermore, CA 94550 (US); HALPIN, John, Tracy, CA 95376 (US); HARRIS, Fritz, Rocklin, CA 95677 (US)
(74) Representative: Ebner von Eschenbach, Jennifer
(86) International application number: PCT/US2001/018970
(87) International publication number: WO 2001/096619

(56) References cited:
- EP-A- 0 666 326
- GB-A- 2 340 781
- US-A- 4 937 421
- US-A- 5 674 328
- US-A- 5 741 559

## Description

The United States Government has rights in this invention pursuant to Contract No. W-7405-ENG-48 between the United States Department of Energy and the University of California for the operation of Lawrence Livermore National Laboratory.

### BACKGROUND OF THE INVENTION

### Field of the Invention

The present invention relates to laser shock processing, and more specifically, it relates to techniques for preparing the surface of a part to be laser peened.

### Description of Related Art

Using high power lasers to improve material properties is one of the most important industrial applications of lasers. Lasers can transmit controllable beams of high-energy radiation for metalworking. Primarily, the laser can generate a high power density that is localized and controllable over a small area. This allows for cost effective and efficient energy utilization, minimizes distortions in surrounding areas, and simplifies material handling. Since the laser pulse involves the application of high power in short time intervals, the process is adaptable to high-speed manufacturing. The fact that the beam can be controlled allows parts having complex shapes to be processed. Also accuracy, consistency, and repeatability are inherent to the system.

Improving the strength of metals by cold working undoubtedly was discovered early in civilization, as ancient man hammered out his weapons and tools. Since the 1950s shot peening has been used as a means to improve the fatigue properties of metals. Another method of shock processing involves the use of high explosive materials in contact with the metal surface.

The use of high intensity laser outputs for the generation of mechanical shock waves to treat the surfaces of metals has been well known since the 1970s. The laser shock process can be used to generate compressive stresses in the metal surfaces adding strength and resistance to corrosive failure.

Lasers with pulse outputs of 10 to 100 J and pulse durations of 10 to 100 ns are useful for generating inertially confined plasmas on the surfaces of metals. These plasmas create pressures in the range of 10,000 to 100,000 atmospheres and the resulting shock pressure can exceed the elastic limit of the metal and thus compressively stress a surface layer as deep or deeper than 1 mm in the metals. Lasers are now becoming available with average power output meaningful for use of the technique at a rate appropriate for industrial production.

In the process of laser shock processing, a metal surface to be treated is painted or otherwise made "black." The black layer acts as an absorber of the laser energy and protects the surface of the part from laser ablation and from melting due to the high temperature of the plasma. A thin layer of water, typically 1 to 2 mm, is flowed over this black surface. The water acts to inertially confine or, as it is called, tamp the plasma generated as the laser energy is absorbed in the short time pulse duration, typically 30 ns. Other suitable materials that act as a tamper are also possible.

A limitation to the usefulness of the process is the ability to deliver the laser energy to the metal surface in a spatially uniform beam. If not uniform, the highest intensity area of the light can cause a breakdown in the water which blocks delivery of meaningful energy to the painted metal surface. A conventional technique to deliver the laser light to the surface is to use a simple lens to condense the laser output to a power density of roughly 100 to 200 J per square centimeter. This condensing technique has the limitation that a true "image" of the laser near-field intensity profile is not obtained at the surface. Rather a field intensity representing something between the near and far fields is generated. This produces diffraction of the laser beam as it is focused down onto the surface and results in very strong spatial modulation and hot spots.

Any phase aberrations generated within the beam, especially those associated with operation of the laser for high average power, can propagate to generate higher intensity areas within the beam. These high peak intensity regions cause breakdown in the water layer, preventing efficient delivery of the laser energy to the surface to be treated. Another potential cause of breakdown in the tamping material is the generation of non-linear effects such as optical breakdown and stimulated scattering. In a normal generation of a 10 ns to 100 ns pulse within a laser, the output slowly builds over a time period exceeding several pulsewidths. This slow, weak intensity helps to seed the non-linear processes that require buildup times of tens of nanoseconds. In conventional techniques, the pulse output of the laser is "sliced" by an external means such as a fast rising electro-optical switch or by an exploding foil. These techniques can be expensive and can limit reliability.

In laser peening, a layer of material is applied over a metal surface to seed the absorption of laser light and to insulate the metal surface from the high temperature of the plasma. The absorption allows a plasma to form and the resulting rapidly formed high pressure from the plasma creates a shock wave that compresses the metal and leaves a residual compressive stress in the surface. This compressive stress improves the fatigue and corrosion strength of the metal. The applied layer also protects the metal from melting due to the high temperature of the plasma. Previous workers have employed paint and tape as the absorptive layer.

U.S. Patent 4,937,421 titled "Laser Peening System and Method" is directed to a laser peening apparatus and method for peening a workpiece. The system includes a foil aligned with a surface of the workpiece to be peened and directing a laser at the aligned foil surface. The foil absorbs energy from the beam and a portion of the foil vaporizes, which creates a hot plasma within the foil. This plasma clips the leading edge of the laser beam to create a sharp rising pulse. Then, a second plasma is created on the paint that coats the workpiece forming the ablation layer. This plasma creates a shock wave that passes through the foil and peens the workpiece surface. However, paint can require a relatively involved procedure to coat surfaces and requires drying time. Using just paint, there is no specific control of the transmission of the ablation layer. One application of paint could provide sufficient attenuation and another transmit too much light causing a plasma that melts the metal surface. Too thick a layer of paint could result in attenuation and diffraction of the shock pulse causing poor imprinting of residual stress. Paint can be difficult to control with respect to uniformity of thickness and adherence to the part.

U.S. Patent No. 5,674,328, titled "Dry Tape Covered Laser Shock Peening" is directed to a method of laser shock peening a metallic part by firing a laser onto a laser shock peening surface of the part which has been adhesively covered by tape having an ablative medium, preferably, a self adhering tape with an adhesive layer on one side of an ablative layer and a confinement medium without flowing a confinement curtain of fluid over the surface upon which the laser beam is firing. Continuous movement is provided between the part and the laser beam while continuously firing the laser beam, which repeatably pulses between relatively constant periods, on a laser shock-peening surface of the part. The peening process uses a laser beam with sufficient power to vaporize the ablative medium so that the pulses form laser beam spots on the surface and a region having deep compressive residual stresses is thus imparted by the laser shock peening process extending into the part from the surface. The confinement medium may be supplied by a single layer of tape having a clear layer over the ablative layer or a thicker lap or thickness of laps of a tape with just an ablative layer where the extra thickness provides the confinement medium. However, applying tape can be time consuming and air pockets, adherence to the surface, and getting tape uniformly applied to components of complex geometry can be a problem. Tape also leaves one or more seams that cause a problem at the joints in that it allows high temperature plasma to leak through to the metal surface. For continuous processing it is necessary to stop operation and retape parts.

### SUMMARY OF THE INVENTION

It is an object of the present invention to provide an absorptive and insulating layer for laser peening that is inexpensive, continuous without joints, easy to apply, fast curing, has appropriately tailored absorption for the laser light and is resilient to multiple laser pulses and is easy to remove.

Other objects of the invention will be apparent from the disclosure herein.

The invention is a process as specified in claim 1. It is a process for designing a coating and applying the coating to a part to be laser peened to improve the fatigue life and corrosion resistance of metals through the use of a high fluence, high intensity laser to drive a compressive stress into the metal surface by means of a shock wave. The shock wave is generated when the laser light is absorbed and rapidly creates an expanding high temperature plasma. It is critically important that the optical absorption depth of the layer be appropriately tailored to absorb or attenuate the laser energy such that the remaining energy density reaching the metal surface is below that which results in plasma initiation on the metal surface itself. Thus, a layer of material is placed on the metal surface to absorb the laser light and to insulate the metal from the heat of the plasma. The layer should be as thin as possible so as to minimize attenuation and diffraction of the shock wave.

In a dip coating process employing a solvent thinned polymer, the part to be coated is cleaned and then dipped into and retracted from the solution. By appropriately adjusting the viscosity of the dip and the vapor pressure (temperature) of the solvent, a highly uniform coating of the part can be obtained. The process is fast, cures rapidly and the coating is easily stripped off after processing. When the coating material is mixed with a solvent, the amount of solvent is adjusted to achieve a viscosity and setting time such that parts achieve a uniform coating of the desired thickness.

The part to be processed is first pre-cleaned with a specified solvent to remove both dirt and oil residues, and is then air-dried. The part is then dipped in a primer or adhesive. Next, a black air-dry synthetic rubber coating material is gently mixed with a solvent. The dry, primer coated part is dipped into the coating material at a specified rate until the desired area is submerged. The part is then retracted at the same rate and air-dried, hot forced air-dried or oven dried.

The dry first coat part is then dipped into the coating material and retracted for a second time at a specified rate. The second dip coating fills any irregularities existing after the first dip, thereby improving uniformity of coating thickness and preventing pinholes in the coating material. The total coating dry thickness is between 4 and 10 mils. The part is then allowed to air-dry prior to laser peening.

A significant advantage of the present invention is the fact that laser peening may be performed one shot right after another without having to repaint or retape. This has to do with the mechanical integrity of the dip coating which is associated with the elastomer resistance of the coating combined with is opaqueness to transmitting laser light. This control is fundamentally important and does not just come from paint or tape.

### BRIEF DESCRIPTION OF THE DRAWINGS

Figure 1 shows a cross-sectional view of an embodiment of the present invention including a metal surface with a primer, a first coating and a second coating.
Figure 2 shows an apparatus for dipping a part at a desired rate.

### DETAILED DESCRIPTION OF THE INVENTION

The invention is a process for coating metals in preparation for laser peening to improve their fatigue life and corrosion resistance. In laser peening a metal workpiece, a high fluence, high intensity laser beam drives a compressive stress into the metal surface of the workpiece by means of a shock wave. The shock wave is generated when the laser light is absorbed and rapidly creates an expanding high temperature plasma in which material ablates from the surface of the workpiece or covering material. Newton's law of action and reaction requires that an impulsive momentum propagate into the metal to counter the momentum of the material ablated from the surface. Techniques for laser peening are disclosed in co-pending U.S. Patent Application Serial No. 09/133,590, titled "Laser Beam Temporal And Spatial Tailoring For Laser Shock Processing". Laser technology usable in the present invention is described in U.S. Patent No. 5,285,310 titled "High Power Regenerative Laser Amplifier," and U.S. Patent No. 5,239,408 titled "High Power, High Beam Quality Regenerative Amplifier,". Embodiments of laser systems usable in the present invention are described in U.S. Patent No. 5,689,363 titled "Long Pulse Width, Narrow-Bandwidth Solid State Laser". In the present invention, a layer of material is placed on the metal surface to absorb the laser light, creating an impulsive shock wave and to insulate the metal from the heat of the plasma.

### General Description

In this invention, a dip coating process employs a solvent thinned polymer (e.g., polyvinylchloride, polyvinylacetate, acrylonitrile butadiene styrene resin) creating a surface coating of minimal or greater optical density. The part to be coated is cleaned and then dipped into and retracted from the solution. By appropriately adjusting the viscosity of the dip, dopant absorbers in the dip and the vapor pressure (temperature) of the solvent, a coating can be obtained on the part that has high uniformity and sufficient optical density. The process is fast, cures rapidly and the coating is easily stripped off after processing

This process, in a simple form, involves an open container in which the preferred coating material is mixed with a solvent. The amount of solvent is adjusted to achieve a viscosity and setting time such that parts achieve a uniform coating of the desired thickness.

### Specific Description

As required, detailed embodiments of the present invention are disclosed herein. However, it is to be understood that the disclosed embodiments are merely exemplary of the present invention that may be embodied in various systems. Therefore, specific details disclosed herein are not to be interpreted as limiting, but rather as a basis for the claims and as a representative basis for teaching one skilled in the art to variously practice the present invention.

### Determination of Optical Density

Prior to executing the steps listed below (parts pre-cleaning, priming, main coating, second coating) an appropriate optical density coating is determined by coating, e.g., pieces of glass as test samples and adjusting the coating thickness and/or absorption coefficient to achieve appropriate optical density.

In laser peening, the laser light incident on the coating must be sufficiently absorbed in the coating to prevent optical breakdown and the formation of a plasma at the interface between the coating and the metal surface. According to Beer's law, light will be attenuated according to the formula Eₘ = Eₒ e^{-ad} where the variable "a" is the unsaturated absorption coefficient, "d" is the thickness of the polymer layer, Eₒ is the incident energy and Eₘ is the energy reaching the metal surface. A metal surface will begin to break down at roughly 500 mJ/cm² for 20 ns pulses whereas the incident energy for laser peening is in the range of 60 J/cm² to 200 J/cm². Thus the laser light needs to be attenuated Eₘ /Eₒ by a factor of 1/400 = e^{-ad}. This requires the product ad to be greater than or equal to 6. For example, for an absorption coefficient of 30 cm⁻¹, a coating thickness d of 200 µm would be required.

Once a piece of glass is coated, its transmission is measured at the wavelength of the laser (1.053 µm wavelength for a Nd:glass laser) and compared to an uncoated piece of glass. The coating thickness and/or absorption coefficient are adjusted until an opacity of 6 or greater is obtained. To maximize the conduction of the shock wave, it is desirable to minimize the coating thickness. However the coating must be sufficiently thick to keep the temperature rise from melting through the coating and melting the metal surface.
Calculations show that an acceptable temperature rise of 40 degrees C occurs for a 100 µm to 200 µm thick coating. Thus the absorption coefficient of the coating can be adjusted to achieve an opacity of 30 cm⁻¹ to 60 cm⁻¹ or greater. Adjustments can be made by adding for example, fine carbon particles to the first and second dip coats.

### Parts Pre-cleaning

Since metal parts are essentially non-reactive to organic solvents, the parts to be laser peened are pre-cleaned with organic solvent to remove oil or other organic residues as well as particulate residues. Appropriate organic solvents would include acetone, methylethyl-ketone (MEK), and isopropyl alcohol. These organic solvents also act to remove residual moisture from the metal surface aiding adhesion of the ablative layer.

### Priming

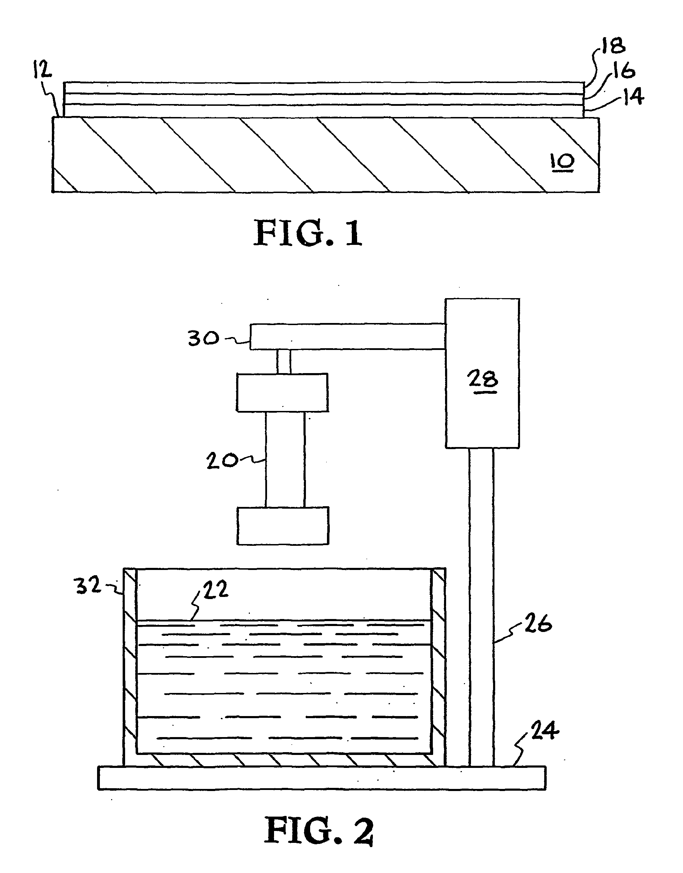

In an open container, an air-dry acrylic primer (e.g., PDI Primer for Plasti-Dip F-716) is gently mixed, so as not to introduce air bubbles, with an appropriate organic solvent (e.g., Naphtha or Toluene). The ratio of the primer coating material to the solvent is optimally within a range of 2/1 and 4/1. An adhesive (e.g. Weldwood Contact Bond Cement) may replace the primer. The resultant viscosity achieved is from 200 to 300 centipoise. Figure 1 shows a cross-sectional view of a metal component 10 with a surface 12 upon which is a primer layer 14, as well as the first coating 16 and the second coating 18 as discussed below.

Figure 2 shows an example apparatus for dipping a part and withdrawing it at a desired rate. The dry, primer coated part 20 is dipped into the coating material 22 at a rate of about 1" per 5 seconds until the desired area is submerged. The part is then retracted at the same rate and air dried for 30 to 40 minutes. In this example, the dipping mechanism comprises a base 24 supporting a stand 26 upon which is mounted a motor controlled screw drive 28 that has an arm 30 to support the part 20 as it is dipped into and retracted from the container 32 of dip coating material 22. A first coat dry thickness of 3 to 5 mils is achieved which provides 50% of the overall coating depth.

### Main coating

In an open container, which allows for a 6" minimum air gap from the fluid surface to the container top, a black air-dry synthetic rubber coating material (e.g., PDI Plasti-Dip U.V. Stable, polyvinyl-chloride resin or polyvinyl-acetate resin) is gently mixed, so as not to introduce air bubbles, with a Naphtha or Toluene based solvent. The ratio of the rubber coating material to the solvent is optimally within a range of 5/1 and 10/1. The resultant viscosity achieved is from 7000 to 15000cps. Figure 1 shows first coating 16 between the primer 14 and the second coating 18. The dry, primer coated part is dipped into the coating material at a rate of about 1" per 5 seconds until the desired area is submerged. Figure 2 shows an apparatus for dipping a part and withdrawing it at a desired rate. The part is then retracted at the same rate and air dried for 30 to 40 minutes. For shorter curing times the solvent can be hot air dried or oven dried. For most applications, a first coat dry thickness of 3 to 5 mils is achieved which provides 50% of the overall coating depth. For applications requiring a thin ablative layer, thinner coatings with higher levels of dopant can be used.

### Second Coating

The dry first coat part is then dipped into the coating material and retracted for a second time at the 1" per 5 seconds rate. Figure 2 shows an example apparatus for applying the coating material at a desired rate. The second dip coating fills any irregularities existing after the first dip, thereby improving uniformity of coating thickness and preventing pinholes in the coating material. Figure 1 shows the second coating 18 on the first coating 16. A second coat dry thickness of 2 to 5 mils is achieved for a total coating dry thickness of 4 to 10 mils. The part is then allowed to dry (in ambient air, hot forced air or an oven) prior to laser peening.

This process provides for a surface that can be repeatedly laser peened in a side-by-side application of laser pulses or with multiple pulses placed one on top of another. No stripping of ablative layer between pulses or between sequences of pulses is required. Stripping of ablative layers between pulses has been a serious impediment to commercialization of the laser peening process. Thus, a significant advantage of the present invention is the fact that laser peening may be performed one shot right after another without having to repaint or retape. This has to do with the mechanical integrity of the dip coating which is associated with the elastomer resistance of the coating combined with is opaqueness to transmitting laser light. This control is fundamentally important and does not just come from paint or tape.

The foregoing description of the invention has been presented for purposes of illustration and description and is not intended to be exhaustive or to limit the invention to the precise form disclosed. Many modifications and variations are possible in light of the above teaching. The embodiments were chosen and described to best explain the principles of the invention and its practical application to thereby enable others skilled in the art to best use the invention in various embodiments and with various modifications suited to the particular use contemplated. The scope of the invention is to be defined by the following claims.

## Claims

1. A method for designing an ablation and insulation layer for placement on a metal surface to be laser peened, comprising:
determining, for a selected laser peening wavelength, a thickness of a coating layer of a selected coating material that will prevent optical breakdown of said metal surface;
applying said coating layer at said thickness onto said metal surface,
wherein the step of applying said coating layer at said thickness onto said metal surface comprises:
cleaning said metal surface with a solvent to produce a cleaned part;
drying said cleaned part to produce a cleaned and dried part;
dipping said cleaned and dried part into a solvent thinned polymer to produce a polymer coated part;
drying said polymer coated part to produce a coated and dried part;
dipping said coated and dried part into said solvent thinned polymer a second time to produce a re-coated part; and
drying said re-coated part to produce a re-coated and dried part.

2. The method of claim 1, wherein said coating material comprises an optical absorption depth, wherein said method further comprises tailoring said optical absorption depth of said coating material to adequately absorb or attenuate laser energy at said laser peening wavelength to provide said metal surface with a laser energy density that will not cause plasma initiation on said metal surface.

3. The method of claim 2, further comprising minimizing said thickness to reduce attenuation and diffraction of a shock wave produced by a laser pulse during laser peening of said metal surface.

4. The method of claim 2, wherein said coating material comprises an absorption coefficient, wherein said optical absorption depth is the product of said absorption coefficient of said coating material and said thickness of said coating layer.

5. The method of claim 4, wherein the step of determining, for a selected laser peening wavelength, a thickness of a coating layer of a selected coating material that will prevent optical breakdown of said metal surface comprises coating a piece of material that is at least partially translucent to said selected laser peening wavelength with said coating material and adjusting said coating thickness to achieve a desired optical density.

6. The method of claim 4, wherein the step of tailoring the optical absorption depth of said coating material comprises adding a dopant with known absorption at the laser wavelength to said coating material.

7. The method of claim 6, wherein said dopant comprises carbon particles.

8. The method of claim 4, further comprising applying said coating layer at said thickness onto said metal surface.

9. The method of claim 1, wherein the steps of (i) drying said cleaned part, (ii) drying said polymer coated part and (iii) drying said re-coated part comprise utilizing a drying method selected from a group consisting of air-drying, hot forced air drying and oven drying.

10. The method of claim 1, wherein the step of cleaning said metal surface with a solvent comprises cleaning said metal surface with a solvent selected from a group consisting of Naphtha and Toluene.

11. The method of claim 1, wherein said solvent thinned polymer comprises a polymer selected from a group consisting of acrylonitrile butadiene styrene resin, polyvinyl-acetate, polyvinyl-chloride resin and a mixture of polyvinyl-acetate and polyvinyl-chloride resin.

12. The method of claim 1, wherein said solvent thinned polymer comprises a black air-dry synthetic rubber coating material mixed with a solvent.

13. The method of claim 12, wherein said black air-dry synthetic rubber comprises PDI Plasti-Dip U.V. Stable.

14. The method of claim 1, wherein said solvent thinned polymer comprises a solvent selected from a group consisting of Naphtha and Toluene.

15. The method of claim 1, wherein said solvent thinned polymer comprises a viscosity within a range of 7000 to 15000cps (7 to 15 Pa.s).

16. The method of claim 1, wherein the step of dipping said cleaned and air-dried part includes dipping and retracting said part at a rate of about 1" (25.4 mm) per 5 seconds.

17. The method of claim 1, wherein said coated and air-dried part comprises a first dry coating thickness of 3 to 5 mils (76 to 127 µm).

18. The method of claim 1, wherein said recoated part comprises a second dry coating thickness of 2 to 5 mils (50 to 127 µm).

19. The method of claim 1, wherein said recoated part comprises a total dry coating thickness of 4 to 10 mils (102 to 254 µm).

## Patentansprüche

1. Verfahren zum Aufbau einer Ablations- und Isolierschicht zur Anordnung auf einer Metalloberfläche, die einem Laser-Peening unterworfen werden soll, welches Verfahren umfasst:
Festlegen der Dicke einer Überzugssschicht aus einem ausgewählten Beschichtungsmaterial für eine ausgewählte Wellenlänge des Laser-Peenings, mit der der optische Durchbruch der Metalloberfläche vermieden wird;
Aufbringen der Überzugssschicht mit dieser Dicke auf die Metalloberfläche;
wobei der Schritt des Aufbringens der Überzugssschicht mit dieser Dicke auf die Metalloberfläche umfasst:
Reinigen der Metalloberfläche mit einem Lösemittel, um ein gereinigtes Teil zu erzeugen;
Trocknen des gereinigten Teils, um ein gereinigtes und getrocknetes Teil zu erzeugen;
Eintauchen des gereinigten und getrockneten Teils in ein mit Lösemittel verdünntes Polymer, um ein mit Polymer beschichtetes Teil zu erzeugen;
Trocknen des polymerbeschichteten Teils, um ein beschichtetes und getrocknetes Teil zu erzeugen;
Eintauchen des beschichteten und getrockneten Teils in das mit Lösemittel verdünnte Polymer für ein zweites Mal, um ein erneut beschichtetes Teil zu erzeugen;
Trocknen des erneut beschichteten Teils, um ein erneut beschichtetes und getrocknetes Teil zu erzeugen.

2. Verfahren nach Anspruch 1, wobei das Beschichtungsmaterials eine optische Absorptionstiefe aufweist und das Verfahren ferner das Anpassen der optischen Absorptionstiefe des Beschichtungsmaterials umfasst, um bei dieser Wellenlänge des Laser-Peenings die Laserenergie ausreichend zu absorbieren oder zu schwächen, um der Metalloberfläche eine Laserenergiedichte bereitzustellen, die auf der Metalloberfläche keine Plasmaauslösung hervorruft.

3. Verfahren nach Anspruch 2, ferner umfassend das Herabsetzen der Dicke auf ein Minimum, um die Schwächung und Ablenkung einer Stosswelle zu verringern, die durch einen Laserimpuls während des Laser-Peenings der Metalloberfläche erzeugt wird.

4. Verfahren nach Anspruch 2, wobei das Beschichtungsmaterial einen Absorptionskoeffizienten hat und die optische Absorptionstiefe das Produkt aus dem Absorptionskoeffizienten des Beschichtungsmaterials und der Dicke dieser Überzugssschicht ist.

5. Verfahren nach Anspruch 4, wobei der Schritt der Festlegung der Dicke einer Überzugssschicht aus einem ausgewählten Beschichtungsmaterial für eine ausgewählte Wellenlänge des Laser-Peenings, mit der der optische Durchbruch der Metalloberfläche vermieden wird, umfasst:
Beschichten eines Materialstückes, das mindestens teilweise für die ausgewählte Wellenlänge des Laser-Peenings transluzent ist, mit dem Beschichtungsmaterial und
Einstellen der Beschichtungsdicke, um die gewünschte optische Dichte zu erhalten.

6. Verfahren nach Anspruch 4, wobei der Schritt des Anpassens der optischen Absorptionstiefe des Beschichtungsmaterials das Zusetzen eines Dotierungsmittels mit bekannter Absorption bei der Laserwellenlänge zu dem Beschichtungsmaterial umfasst.

7. Verfahren nach Anspruch 6, wobei das Dotierungsmittel Kohlenstoffpartikel aufweist.

8. Verfahren nach Anspruch 4, ferner umfassend das Aufbringen der Überzugssschicht mit dieser Dicke auf die Metalloberfläche.

9. Verfahren nach Anspruch 1, wobei die Schritte des (i) Trocknens des gereinigten Teils, (ii) des Trocknens des polymerbeschichteten Teils und (iii) des Trocknens des erneut beschichteten Teils die Anwendung einer Methode zum Trocknen umfasst, die ausgewählt ist aus der Gruppe, bestehend aus: Lufttrocknen, Heißlufttrocknen und Ofentrocknen.

10. Verfahren nach Anspruch 1, wobei der Schritt des Reinigens der Metalloberfläche mit einem Lösemittel das Reinigen der Metalloberfläche mit einem Lösemittel umfasst, das ausgewählt ist aus der Gruppe, bestehend aus Naphtha und Toluol.

11. Verfahren nach Anspruch 1, wobei das mit Lösemittel verdünnte Polymer ein Polymer aufweist, das ausgewählt ist aus der Gruppe, bestehend aus Acrylnitril-Butadien-Styrolharz, Polyvinylacetat-, Polyvinylchloridharz und einer Mischung von Polyvinylacetat- und Polyvinylchloridharz.

12. Verfahren nach Anspruch 1, wobei das mit Lösemittel verdünnte Polymer ein mit einem Lösemittel gemischtes, schwarzes, lufttrocknendes Beschichtungsmaterial aus Synthesekautschuk aufweist.

13. Verfahren nach Anspruch 12, wobei der schwarze, lufttrocknende Synthesekautschuk "PDI Plasti-Dip UV Stable" aufweist.

14. Verfahren nach Anspruch 1, wobei das mit Lösemittel verdünnte Polymer ein Lösemittel aufweist, das ausgewählt ist aus der Gruppe, bestehend aus Naphtha und Toluol.

15. Verfahren nach Anspruch 1, wobei das mit Lösemittel verdünnte Polymer ein Viskosität im Bereich von 7 bis 15 Pa · s (7.000 bis 15.000 cP) hat.

16. Verfahren nach Anspruch 1, wobei der Schritt des Tauchens des gereinigten und luftgetrockneten Teils das Tauchen und Herausziehen des Teils mit einer Geschwindigkeit von etwa 25,4 mm (1") pro 5 Sekunden einschließt.

17. Verfahren nach Anspruch 1, wobei das beschichtete und luftgetrocknete Teil eine erste Trockenschichtdicke von 76 bis 127 µm (3 bis 5 mil) aufweist.

18. Verfahren nach Anspruch 1, wobei das erneut beschichtete Teil eine zweite Trockenschichtdicke von 50 bis 127 µm (2 bis 5 mil) aufweist.

19. Verfahren nach Anspruch 1, wobei das erneut beschichtete Teil eine zweite Trockenschichtdicke von 102 bis 254 µm (4 bis 10 mil) aufweist.

## Revendications

1. Méthode pour concevoir une couche d'ablation et d'isolement à mettre en place sur une surface de métal à marteler au laser comprenant:
la détermination, pour une longueur d'onde sélectionnée de martelage au laser, d'une épaisseur d'une couche de revêtement d'un matériau sélectionné de revêtement qui empêchera la dissociation optique de ladite surface de métal;
l'application de ladite couche de revêtement à ladite épaisseur sur ladite surface de métal, où l'étape d'application de ladite couche de revêtement à ladite épaisseur sur ladite surface de métal comprend:
le nettoyage de ladite surface de métal avec un solvant pour produire une pièce propre;
le séchage de ladite pièce propre pour produire une pièce nettoyée et séchée;
l'immersion de la pièce nettoyée et séchée dans un polymère dilué par un solvant pour produire une pièce enduite du polymère;
le séchage de ladite pièce enduite du polymère pour produire une pièce enduite et séchée;
l'immersion ladite pièce enduite et séchée dans ledit polymère dilué au solvant une seconde fois pour produire une pièce réenduite; et
le séchage ladite pièce réenduite pour produire une pièce réenduite et séchée.

2. Méthode de la revendication 1, où ledit matériau de revêtement comprend une profondeur d'absorption optique, où ladite méthode consiste de plus à déterminer ladite profondeur d'absorption optique dudit matériau de revêtement pour absorber ou atténuer de façon adéquate l'énergie du laser à ladite longueur d'onde de martelage au laser pour procurer à ladite surface de métal une densité d'énergie du laser qui ne provoquera pas une initiation de plasma sur ladite surface de métal.

3. Méthode de la revendication 2, consitant de plus à minimiser ladite épaisseur pour réduire l'atténuation et la diffraction d'une onde de choc produite par une impulsion laser pendant le martelage au laser de ladite surface de métal.

4. Méthode de la revendication 2, où ledit matériau de revêtement comprend un coefficient d'absorption, où ladite profondeur d'absorption optique est le produit dudit coefficient d'absorption dudit matériau de revêtement et de ladite épaisseur de ladite couche de revêtement.

5. Méthode de la revendication 4, où l'étape de déterminer, pour une longueur d'onde sélectionnée de martelage au laser, une épaisseur d'une couche de revêtement d'un matériau sélectionné de revêtement qui empêchera une dissociation optique de ladite surface de métal, consiste à revêtir une pièce de matière qui est au moins partiellement translucide à ladite longueur d'onde sélectionnée de martelage au laser par ledit matériau de revêtement et à ajuster ladite épaisseur de revêtement pour atteindre une densité optique souhaitée.

6. Méthode de la revendication 4, où l'étape de déterminer la profondeur d'absorption optique dudit matériau de revêtement consiste à ajouter un dopant d'une absorption connue à la longueur d'onde du laser audit matériau de revêtement.

7. Méthode de la revendication 6, où ledit dopant comprend des particules de carbone.

8. Méthode de la revendication 4, consistant de plus à appliquer ladite couche de revêtement à ladite épaisseur sur ladite surface de métal.

9. Méthode de la revendication 1, où les étapes de
(i) sécher ladite pièce nettoyée, (ii) sécher ladite pièce enduite du polymère et (iii) sécher ladite pièce réenduite consiste à utiliser une méthode de séchage sélectionnée dans un groupe consistant en séchage à l'air, séchage à l'air forcé chaud et séchage au four.

10. Méthode de la revendication 1, où l'étape de nettoyer ladite surface de métal par un solvant consiste à nettoyer ladite surface de métal par un solvant sélectionné dans le groupe consistant en Naphta et Toluène.

11. Méthode de la revendication 11, où ledit polymère dilué au solvant comprend un polymère sélectionné dans un groupe consistant en résine d'acrylonitrile butadiène styrène, résine de polyvinyl-acétate, polyvinyl-chlorure et un mélange de résine de polyvinyl-acétate et polyvinyl-chlorure.

12. Méthode de la revendication 1, où ledit polymère dilué au solvant comprend un matériau de revêtement de caoutchouc synthétique noir séché à l'air mélangé à un solvant.

13. Méthode de la revendication 12, où ledit caoutchouc synthétique noir séché à l'air comprend PDI Plasti-Dip Stable aux U.V.

14. Méthode de la revendication 1, où ledit polymère dilué au solvant comprend un solvant sélectionné dans un groupe consistant en Naphta et Toluène.

15. Méthode de la revendication 1, où ledit polymère dilué au solvant comprend une viscosité dans une gamme de 7000 à 15000 cps (7 à 15 Pa.s).

16. Méthode de la revendication 1 où l'étape d'immerger ladite pièce nettoyée et séchée à l'air consiste à immerger et à retirer ladite pièce à une vitesse d'environ 1" (25,4 mm) pour 5 secondes.

17. Méthode de la revendication 1, où ladite pièce enduite et séchée à l'air comprend une première épaisseur du revêtement sec de 3 à 5 millièmes de pouce (76 à 127 µm).

18. Méthode de la revendication 1, où ladite pièce réenduite comprend une seconde épaisseur de revêtement sec de 2 à 5 millièmes de pouce (50 à 127 µm).

19. Méthode de la revendication 1, où ladite pièce réenduite comprend une épaisseur de revêtement sec total de 4 à 10 millièmes de pouce (102 à 254 µm).
